# EUROPEAN PATENT APPLICATION

(11) **EP 2 442 268 A1**
(43) Date of publication of application: **18.04.2012**
(21) Application number: 11250851.0
(22) Date of filing: 14.10.2011
(51) Int. Cl.: G06Q 40/00

(54) **Apparatus for annuities and associated methods**

(30) Priority: 15.10.2010 GB 1017480
(71) Applicant: Baldernock Developments Limited, Glasgow G3 7PJ (GB)
(72) Inventor: Gavin, Stewart, Milngavie, Glasgow G62 8DU (GB)
(74) Representative: Naismith, Robert Stewart

(57) **Abstract**

There are described methods for determining a user bonus payment amount, which may be associated with an annuity fund. Such a user bonus payment amount can be accumulated with a user basic payment amount to provide a user annuity payment associated with the annuity fund. In some examples, this is achieved by determining a performance parameter from fund data associated with the performance of an annuity fund, and comparing the determined performance parameter with a user-threshold parameter, where user bonus payment amount is based on the comparison of the performance parameter and the user-threshold parameter. There is also described associated apparatus comprising a comparator configured to receive fund data and an accumulator configured to determine a user bonus payment amount.

## Description

### Technical Field

This invention relates to the field of apparatus for annuities and associated methods. In particular, but not exclusively, the invention relates to apparatus for annuities for providing a guaranteed income, with the possibility of a bonus payment, and associated methods. In some cases, annuities for providing a guaranteed income, with the possibility of a bonus payment, may be considered to be with-profit annuities.

### Background

Broadly speaking, annuity products are distinct from other investments products, in that they can provide a regular income to a user in exchange for payment to an investment, or annuity fund, which in turn is invested by an annuity operator, such as an insurance company. In some cases, the regular income to the user is guaranteed by the operator, irrespective of the performance of the annuity fund. Commonly, such annuity products are purchased at the time of retirement, or at least later in life.

Most modern systems for implementing such annuities can be complex, using dedicated hardware, firmware and/or software. Prior non-profit annuity products, which provide a guaranteed income to a user regardless, can be relatively straight forward to establish by an operator. However, recent trends have been to provide alternative types of annuities products, which are far more complex to provide than non-profit annuities. As such, there are significant problems when considering how to implement and run these new and complex annuity systems.

This background serves to set a scene to allow a skilled reader to better appreciate the following description. Therefore, none of the above discussion should necessarily be taken as an acknowledgement that that discussion is part of the state of the art or is common general knowledge. One or more aspects/embodiments of the invention may or may not address one or more of the background issues.

### Summary

There is provided apparatus for annuities and associated methods.

According to a first embodiment, there is provided a method for determining a user bonus payment amount associated with an annuity fund.

The method may comprise determining a performance parameter from fund data associated with the performance of an annuity fund. The method may comprise comparing the determined performance parameter with a user-threshold parameter. The method may comprise determining a user bonus payment amount based on the comparison of the performance parameter and the user-threshold parameter, the user bonus payment amount to be accumulated with a user basic payment amount to provide a user annuity payment associated with the annuity fund.

The method may additionally comprise accumulating the user bonus payment amount and a user basic payment amount to allow for providing a user annuity payment (i.e. a total annuity payment). The method may comprise providing for paying the user annuity payment to the user. The method may comprise paying the user annuity payment to the user.

The user bonus payment amount may be associated with an upper bonus limit. The user bonus payment amount may be associated with a lower bonus limit. The lower bonus limit may be zero. The method may comprise providing an upper and/or lower bonus limit. The method may comprise determining a user bonus payment amount based on the comparison of the performance parameter and the user-threshold parameter, and addition on an upper and/or lower bonus limit (e.g. a provided upper and/or lower bonus limit).

The upper limit, and/or initial user bonus payment amount may be predetermined by the user, and/or an operator.

The method may comprise varying (e.g. reducing) the user bonus payment amount from an upper limit when the performance parameter exceeds, or is equal to, the user-threshold parameter. The method may comprise varying (e.g. reducing) the user bonus payment amount from a previously determined user bonus payment amount when performance parameter exceeds, or is equal to, the user-threshold parameter.

The method may comprise varying (e.g. increasing) the user bonus payment amount from a previously determined user bonus payment amount when the performance parameter is less than the user-threshold parameter. The method may comprise varying (e.g. increasing) the user bonus payment amount from a previously determined user bonus payment amount when the performance parameter is less than the user-threshold parameter only while the variation (e.g. increase) would not exceed the upper limit.

The method may comprise determining the user bonus payment amount to be an amount commensurate with a compared difference between the performance parameter and the threshold parameter. The method may comprise varying (e.g. reducing) the annuity bonus payment amount from the upper bonus limit, or a previously determined annuity bonus payment amount, by an amount that is commensurate with the compared difference between the performance parameter and the threshold parameter.

The annuity fund may be a cumulative annuity fund (e.g. common to two or more users). The annuity fund may be an individual annuity fund (e.g. specific to one user). The annuity fund may comprise one or more investments (e.g. corporate bonds, gilts, swaps, cash alternatives, etc.). The annuity fund may comprise a portfolio of investments.

The fund data may comprise data associated with the number of defaults, or impairments on investments, of the particular annuity fund. The fund data may comprise data associated with the expected number of defaults, or impairments, of that particular annuity fund. The performance parameter may be determined from the number of defaults, or impairments on investments, of the particular annuity fund (e.g. determined from the actual number of defaults, or impairments on investments, and the expected number of defaults or impairments).

The performance parameter may comprise a percentage, or ratio, which may be associated with the actual performance of the annuity fund (e.g. associated with the actual performance of the annuity fund with expected performance of the annuity fund). The method may comprise receiving fund data associated with one or both of the expected performance of the annuity fund and the actual performance of the annuity fund. The method may comprise receiving fund data associated with the actual performance of the annuity fund for use with data associated with the expected performance, in order to provide the performance parameter.

Fund data may be communicated, and/or received, from a fund database. The fund database may comprise data associated with investments of the annuity fund, for example, one or more of: type of assets held; yield; maturity date; rating; or the like.

The method may determine a user bonus payment amount by additionally using longevity data associated with predicted, or expected, longevity levels (e.g. life expectancy) of one or more users. The method may comprise maintaining the user bonus payment amount at the upper limit, or at a previously determined user bonus payment amount, when the longevity data suggest a reduction in expected longevity, even if the performance parameter exceeds, or is equal to, the user-threshold parameter. The method may comprise varying (e.g. reducing) the user bonus payment amount from the upper limit, or from a previously determined user bonus payment amount, when the longevity data suggest an increase in expected longevity, even if the performance parameter is less than, or is equal to, the user-threshold parameter.

To determine a user bonus payment amount, the longevity data may additionally comprise one or more of the following: user location data (e.g. postcode, region, country); lifestyle data (e.g. health conditions, such as diabetes, smoker, etc, and/or risk hobbies or occupation, such as soloing, construction, etc.); user specific data (e.g. sex). Longevity data may be specific to an annuity fund operator. Longevity data may be based on industry or national data.

The user-threshold parameter may be associated with the user. The user-threshold parameter may be associated with two or more users (e.g. common to two or more users). The user-threshold parameter may be associated with the particular annuity fund, which may be a cumulative annuity fund or an individual annuity fund.

The user-threshold parameter may be associated with an expected amount, or percentage, of defaults or impairments of the annuity fund (e.g. in a particular period, such a in a month, or year, or the like). Defaults or impairments may be expressed as full (e.g. 1, or 100%, default), partial (e.g. 0.4, or 40%, default), or combination thereof (e.g. 1.4 defaults, 140% defaults). For example, a full default may occur when a total loss occurs of a particular asset associated with the fund. In other words, no income is subsequently generated from that asset. A partial loss may occur when there is only a partial loss of an asset. In other words, part of the asset is recovered (e.g. through agreement). The user-threshold parameter may be associated with one or more user basic payment amounts. The user-threshold parameter may be associated with upper and/or lower limits of the user bonus payment amount.

The user-threshold parameter may be predefined, for example, predefined by the user, and/or annuity operator (e.g. predefined when a user contracts to an annuity fund). The method may comprise determining the user-threshold parameter, such as determining the user-threshold parameter at some, or all periods. The user-threshold parameter may be determined when user bonus payment amount is to be determined (e.g. at, or around, the same time). For example, the user-threshold parameter may be determined by calculating a future expected performance of the annuity fund based on the actual performance of an annuity fund to date.

The method may comprise determining an initial user-threshold parameter. The method may comprise determining subsequent user-threshold parameters (e.g. after a period comprising defaults).

A determined, or subsequently determined, user-threshold parameter may be associated with the user annuity payment amount for a particular period (e.g. the total amount payable to a user for a particular period). The particular period may be the present payment period, or a previous payment period. The particular period may be the initial period. For example, the determined user-threshold parameter may relate to the initial user annuity payment amount, user bonus payment amount or user basic payment amount.

The performance parameter may be associated with the projected, or expected, fund performance for subsequent periods (e.g. the next period). The expected performance may be made based on the assumption of no future defaults/impairments. The expected performance may be determined using longevity data.

The method may comprise determining a reduction in user bonus payment amount when a comparison of the performance parameter (e.g. future fund performance/possible user annuity payment amount for a user) is less than the user-threshold parameter (e.g. initial user annuity payment amount). The method may comprise determining no reduction, or an increase, in user bonus payment amount when a comparison of the performance parameter (e.g. future fund performance/possible user annuity payment amount for a user) is greater than the user-threshold parameter (e.g. present user annuity payment amount).

The method may comprise determining no reduction, or an increase, in user bonus payment amount when a comparison of the performance parameter is greater than a previously determined performance parameter (e.g. determined for a previous, or initial period). Such a determination may be provided even when the performance parameter is less than a determined user-threshold parameter. This may allow for a bonus, which has previously been reduced, to be increased. In some cases, this increase may be such that the user bonus payment amount, or user annuity payment amount, is not greater than an initial amount (e.g. an amount initially agreed by a user as a period payment).

The method may comprise receiving the user-threshold parameter for comparing with the determined performance parameter. The method may comprise receiving the user-threshold parameter from a fund database, or a user database.

The method may comprise determining the user bonus payment amount from time to time. The method may comprise determining the user bonus payment amount at intervals, such as regular intervals (e.g. weekly, monthly, annually, etc.).

The method may comprise communicating a determined user bonus payment amount for subsequent accumulation with a user basic payment amount (e.g. determining a user bonus payment amount remotely for communication and subsequent accumulation with a user basic payment amount).

According to a second embodiment, there is provided apparatus for determining a user bonus payment amount associated with an annuity fund. The apparatus may comprise a comparator configured to receive fund data associated with performance of an annuity fund. The comparator may be configured to determine a performance parameter using received fund data. The comparator may further be configured to compare a determined performance parameter with a user-threshold parameter associated with an annuity fund. The apparatus may comprise an accumulator configured to determine a user bonus payment amount for a user based on the comparison of the comparator. Such a user bonus payment amount may be for accumulation with a user basic payment amount to provide a user annuity payment associated with an annuity fund.

The apparatus may be configured to communicate a determined user bonus payment amount to allow for providing a user annuity payment.

The user bonus payment amount may be associated with an upper bonus limit. The user bonus payment amount may be associated with a lower bonus limit. The lower bonus limit may be zero. The apparatus may be configured to determine, or use, an upper and/or lower bonus limit. The accumulator may be configured to determine a user bonus payment amount based on the comparison of the comparator, and on an upper and/or lower bonus limit (e.g. a provided upper and/or lower bonus limit).

The apparatus may be configured to modify (e.g. reduce) a user bonus payment amount from an upper limit when the comparator determines that a performance parameter exceeds, or is equal to, a user-threshold parameter. The apparatus may be configured to modify (e.g. reduce) a user bonus payment amount from a previously determined user bonus payment amount when the comparator determines that a performance parameter exceeds, or is equal to, a user-threshold parameter.

The apparatus may be configured to modify (e.g. increase) a user bonus payment amount from a previously determined user bonus payment amount when the comparator determines a performance parameter to be less than a user-threshold parameter. The apparatus may be configured to modify (e.g. increase) a user bonus payment amount from a previously determined user bonus payment amount when the comparator determines a performance parameter to be less than a user-threshold parameter only while an increase would not exceed an upper limit.

The apparatus may be configured to determine a user bonus payment amount to be an amount commensurate with a compared difference between a performance parameter and a threshold parameter. The apparatus may be configured to modify (e.g. reduce) a user bonus payment amount from an upper bonus limit, or a previously determined user bonus payment amount, by an amount that is commensurate with a compared difference between a performance parameter and a threshold parameter.

The apparatus may be for use with an annuity fund that is a cumulative annuity fund (e.g. common to two or more users). The apparatus may be for use with an annuity fund that is an individual annuity fund (e.g. specific to one user). The annuity fund may comprise one or more investments (e.g. corporate bonds, gilts, swaps, cash alternatives, etc.). The annuity fund may comprise a portfolio of investments.

The apparatus may be in communication with a fund database in order to receive fund data. The apparatus may comprise a fund database. Fund data may comprise data associated with the number of defaults, or impairments on investments, of a particular annuity fund. Fund data may comprise data associated with an expected number of defaults, or impairments, of a particular annuity fund (e.g. a predetermined level of defaults, or the like).

The apparatus may be configured to determine a performance parameter from fund data comprising the number of defaults, or impairments on investments, of a particular annuity fund (e.g. determined from an actual number of defaults, or impairments on investments, and an expected number of defaults or impairments).

The apparatus may be configured to determine a performance parameter as a percentage, or ratio, associated with performance of an annuity fund.

The apparatus may be configured to determine a user bonus payment amount by additionally using longevity data associated with predicted, or expected, longevity levels (e.g. life expectancy, health, sex, hobbies, postcode, etc. The apparatus may be configured to maintain a user bonus payment amount at an upper limit, or at a previously determined user bonus payment amount, when longevity data suggests a reduction in expected longevity, even if a determined performance parameter exceeds, or is equal to, a user-threshold parameter. The apparatus may be configured to reduce a user bonus payment amount from an upper limit, or from a previously determined user bonus payment amount, when longevity data suggests an increase in expected longevity, even if a determined performance parameter is less than, or is equal to, a user-threshold parameter.

The apparatus may be configured to receive a user-threshold parameter for comparing with the determined performance parameter. The apparatus may be configured to receive a user-threshold parameter from a user database. The apparatus may comprise a user database.

The user-threshold parameter may be associated with a user (e.g. only one user). The user-threshold parameter may be associated with two or more users (e.g. common to two or more users). The user-threshold parameter may be associated with a particular annuity fund, which may be a cumulative annuity fund or an individual annuity fund.

The user-threshold parameter may be associated with an expected amount, or percentage, of defaults or impairments of the annuity fund. The user-threshold parameter may be associated with one or more user basic payment amounts. The user-threshold parameter may be associated with upper and/or lower limits of the user bonus payment amount.

The user-threshold parameter may be a predefined parameter (e.g. predefined when a user contracts to an annuity fund). The user-threshold parameter may be determined when user bonus payment amount is to be determined (e.g. at around a similar time). For example, the user-threshold parameter may be determined by calculating a future expected performance of the annuity fund based on the actual performance of an annuity fund to date. The future expected performance may be made based on the assumption of no further defaults/impairments.. The future expected performance may be determined using longevity data.

The apparatus may be configured to determine an initial user-threshold parameter. The apparatus may be configured to determine one or more subsequent user-threshold parameters (e.g. after a period comprising defaults).

A determined, or subsequently determined, user-threshold parameter may be associated with the user annuity payment amount for a particular period (e.g. the total amount payable to a user for a particular period). The particular period may be the present payment period, or a previous payment period. The particular period may be the initial period. For example, the determined user-threshold parameter may relate to the initial user annuity payment amount, user bonus payment amount or user basic payment amount.

The performance parameter may be associated with the projected, or expected, fund performance for subsequent periods (e.g. the next period). The expected performance may be made based on the assumption of no future defaults/impairments. The expected performance may be determined using longevity data.

The apparatus may be configured to determine a reduction in user bonus payment amount when a comparison of the performance parameter (e.g. future fund performance/possible user annuity payment amount for a user) is less than the user-threshold parameter (e.g. initial user annuity payment amount).

The apparatus may be configured to determine no reduction, or an increase, in user bonus payment amount when a comparison of the performance parameter is greater than a previously determined performance parameter (e.g. determined for a previous, or initial period). Such a determination may be provided even when the performance parameter is less than a determined user-threshold parameter. This may allow for a bonus, which has previously been reduced, to be increased. In some cases, this increase may be such that the user bonus payment amount, or user annuity payment amount, is not greater than an initial amount.

The apparatus may be configured to determine a user bonus payment amount from time to time. The apparatus may be configured to determine a user bonus payment amount at intervals, such as regular intervals (e.g. weekly, monthly, annually, etc.). According to a third embodiment, there is an annuity system, comprising, or in communication with, one or more apparatus according to the second embodiments.

The annuity system may be configured to determine one or more user bonus payment amounts with user basic payment amounts in order to provide one or more user annuity payments.

According to a fourth embodiment, there is a method comprising:
determining the performance of an annuity fund;
comparing the determined performance with a user-threshold; and
determining a user bonus payment amount based on the comparison of the performance and the user-threshold, the user bonus payment amount to be accumulated with a user basic payment amount to provide a user annuity payment associated with the annuity fund.

The determined performance may be over a previous payment period.

According to a fifth embodiment, there is a method of determining a user annuity payment amount for an annuity fund, the method comprising:
receiving a user bonus payment amount according to any of the features of the first or fourth aspects; and
determining a user annuity payment amount by accumulating the received user bonus payment amount with a user basic payment amount.

The method may comprise communicating the accumulated user annuity payment amount to allow for subsequent payment of the user annuity payment amount.

According to a sixth embodiment there is provided a method of allowing for determining a user bonus payment amount for an annuity fund, the method comprising:
receiving fund data associated with the performance of an annuity fund;
determining a performance parameter using the received fund data; and
communicating the performance parameter for subsequent use with a threshold parameter associated with the annuity fund, to allow for determining an annuity bonus payment amount.

According to a seventh embodiment, there is a method of allowing for determining a user bonus payment amount for an annuity fund, the method comprising:
receiving a performance parameter based on fund data associated with the performance of an annuity fund;
comparing the received performance parameter with a user-threshold parameter; and
determining a user bonus payment amount based on the comparison of the performance parameter and the user-threshold parameter, the user bonus payment amount to be accumulated with a user basic payment amount to provide a user annuity payment associated with the annuity fund.

According to an eighth embodiment, there is a method comprising:
determining a performance parameter from fund data associated with the performance of an annuity fund;
comparing the determined performance parameter with a user-threshold parameter; and
determining a user bonus payment amount based on the comparison of the performance parameter and the user-threshold parameter, the user bonus payment amount to be accumulated with a user basic payment amount to provide a user annuity payment associated with the annuity fund.

According to a ninth embodiment, there is a method of determining an annuity bonus payment amount for an annuity fund, the method comprising:
comparing expected performance of an annuity fund and actual performance of the annuity fund with a threshold value; and
determining an annuity bonus payment amount based on the comparison, the annuity bonus payment amount to be accumulated with a basic annuity payment amount to provide a total annuity payment of the annuity fund.

According to a tenth embodiment there is a computer program (e.g. comprising computer readable code), which when run on a computer device, causes the computer device to perform the method of any of the first, fourth, fifth, sixth, seventh, eighth or ninth embodiments.

The computer program may be provided on a computer readable medium, configured to provide the method of any of the first, fourth, fifth, sixth, seventh, eighth or ninth aspects.

The invention includes one or more corresponding embodiments or features in isolation or in various combinations whether or not specifically stated (including claimed) in that combination or in isolation. For example, any features of the first aspect may be equally applicable with any of the fourth, fifth, sixth, seventh, eighth or ninth embodiments, without the need to explicitly and unnecessarily list those various combinations and permutations here. Corresponding means for performing one or more of the discussed functions are also within the present disclosure.

It will be appreciated that one or more embodiments may be useful when determining annuity payments comprising a basic payment amount and a bonus amount. Such embodiments may allow for ease of determination user bonus payment amounts, when compared to existing methods.

The above summary is intended to be merely exemplary and non-limiting.

### Brief Description of the Figures

Advantages of the invention will become apparent to those skilled in the art with the benefit of the following detailed description of exemplary embodiments and upon reference to the accompanying exemplary drawings in which:
Figure 1 shows a simplified example of a system for providing annuities, comprising an operator with an apparatus for determining a user bonus payment amount associated with an annuity fund;
Figure 2 shows an example of the apparatus shown in Figure 1;
Figures 3a and 3b show flow diagrams of the use of the system and apparatus of Figure 1 and 2;
Figure 4 shows a chart 500 plotting exemplary user annuity payment amount for a with-profit annuity operator, using the apparatus of Figure 2;
Figure 5 shows an alternative simplified example of a system for providing annuities, comprising an operator with an apparatus for determining a user bonus payment amount associated with an annuity fund;
Figure 6 shows an example of the apparatus shown in Figure 5;
Figure 7 shows a flow diagram of the use of the system and apparatus of Figures 5 and 6; and
Figure 8 shows a chart 500 plotting exemplary user annuity payment amount for a with-profit annuity operator, using the apparatus of Figure 6;

### Description of Specific Embodiments

Non-profit annuity products, such as those provided by insurance operators, or the like, provide users with a series of essentially fixed payments in exchange for a payment to an annuity fund. Generally, the user payment to the operator is a one-off payment (e.g. at retirement), and the fixed payments from the operator to the user are provided at particular intervals (e.g. monthly, annually, etc.) for a determined length of time (e.g. for the lifetime of the user). To be able to guarantee the fixed annuity payment to a user, an operator will absorb risk associated with investments that are made on behalf of the user with the user's payment.

If the operator's annuity fund performs better than that operator expected, then the user will not necessarily see that benefit: any excess in performance will be apportioned to the operator. Similarly, if the fund performs worse than expected, then the user will not necessarily see a reduction in payments, because the fixed annuity payment is guaranteed. Of course, in order to accommodate the possibility of the fund performing poorly, the fixed payments provided to a user can be significantly lower than would otherwise be expected by the fund's predicted performance.

As such, alterative annuity products are being made available to users. Unit linked, or variable, annuities provide users with a different way in which to receive an income from their invested payment, in which the user is exposed - in some cases entirely exposed - to the performance of the annuity fund. As such, the annuity payments are no longer fixed, but can increase and decrease (e.g. with equity and/or property markets). However, because such annuity products are generally purchased at retirement, or later in life, users may not wish to be exposed to such risk, and as such these annuity products can seem unattractive unless the user has other sources of retirement income upon which to rely.

The result is that there has been a desire to provide annuity products that do not conform to either of the above scenarios. An alternative to both of the above annuities products is one in which a user can make a payment to an operator (e.g. a one-off payment), and receive periodic guaranteed payments (e.g. regular fixed payments), but also have the possibility of receiving a bonus payment should the operators annuity fund perform well (e.g. better than expected, or no worse than expected). In some cases, these types of annuities products are referred to as *with-profit annuities.*

In such cases, a user basic payment amount is guaranteed by the operator and is generally fixed (e.g. up front). In addition, a user bonus payment amount is calculated and provided depending upon the performance of the fund. The cumulative amount may be considered to be a user annuity payment amount. Of course, the user basic payment amount is often less than would have been provided by the non-profit annuity product for the same fund size (e.g. 70%-90%, or less) of the guaranteed amount paid on non-profit annuity). Nevertheless, such products do allow the user to benefit from a fund that is performing well, without worrying about total loss of income should the fund begin to perform worse than expected.

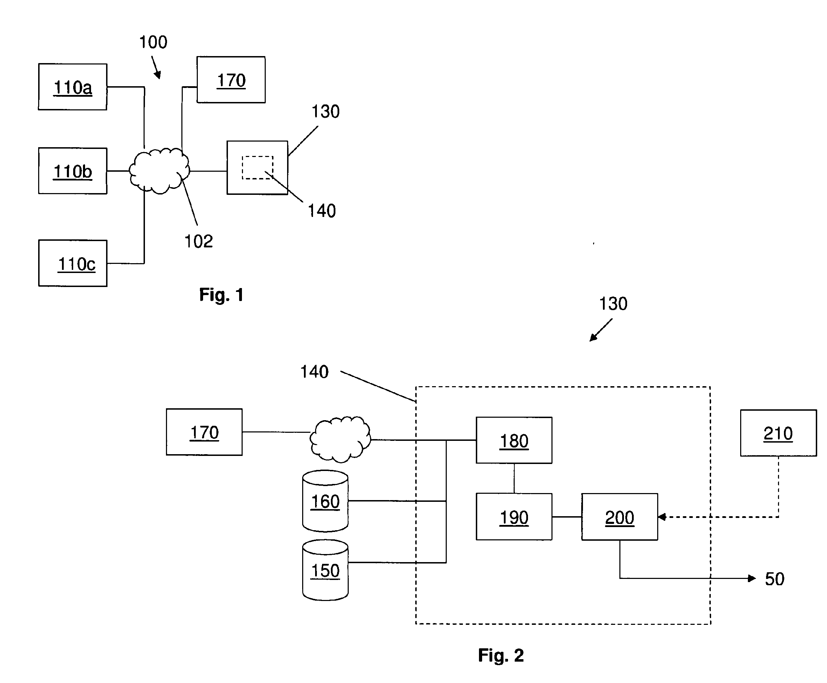

Figure 1 show a simplified representation of a system 100 for providing annuities, whereby a user provides payment to an operator 130 in exchange for a series of user annuity payments, or total annuity payments (i.e. user basic payment and, if appropriate, a user bonus payment) from that annuity operator 130. The system 100 is implemented using a communication network 102, which in this example is the Internet. For the purposes of explanation, three user terminals 110a, 110b, 100c are shown, but of course, the system 100 may comprise further user terminals 110. User terminals 110 may include, for example, home computers, portable electronic devices, such as a personal digital assistant, etc. Only a single annuity operator 130 is shown, but in alternative embodiments, more than one operator 130 may be provided.

Each user terminal 110a-110c is in communication with the annuity operator 130 (e.g. insurance operators) using the communications network 102. It will be appreciated that the network 102 may by wired or wireless network, or combination thereof. Communications between users 110a-110c and annuity operator 130 are encrypted using encryption protocols, such as using Transport Layer Security (e.g. Hypertext Transfer Protocol Secure), or the like.

The operator 130 comprises apparatus 140 for determining user bonus payments amounts based on certain parameters, as will be described. Such user bonus payment amounts are based on the performance of an annuity fund of the operator 130, and are determined in respect of each particular user such that the user bonus payment amount can be added to a user basic payment amount to provide a user annuity payment amount. In that regard, the apparatus 140 can be considered to be for use in with-profit annuity bonus determination. The operator 130 further comprises a user database 150, and a fund database 160, each in communication with the apparatus 140 (see Figure 2).

The user database 150 is configured to store data associated with all users (e.g. 110a, 110b, 110c) of a particular annuity fund of the operator 130. User data stored on the user database 150 may include, for example, age, postcode, health, sex, particular annuity contract parameters, such as user payment (e.g. fund size), user basic payment amount (i.e. guaranteed payment amount), user bonus payment amount to date, etc.

It will be appreciated that the operator 130 may comprise a plurality of annuity funds, each comprising separate portfolios of investments. However, in this case - and for ease of understanding - consider that the operator 130 operates a single annuity fund, which is associated with several users (e.g. 110a, 110b, 110c). Therefore, the fund database 160 comprises fund data associated with assets of the single annuity fund of the operator 130. The fund database 160 comprises fund data, such as, type of assets held, yield, maturity date, rating, etc.

The operator 130 is further in communication with an Economic Scenario Generator 170 using the network 102. Such Economic Scenario Generators 170 are well known in the art, and can be considered to provide stochastic simulation of numerous possible economic scenarios based on certain financial and macroeconomic variables.

Figure 2 shows in detail the apparatus 140 for determining user bonus payments amounts shown in Figure 1. As described, the apparatus 140 is in communication with the user database 150 and the fund database 160. The apparatus 140 comprises an annuity payment predictor 180, which is configured to receive user data (e.g. data regarding all users 100a, 100b, 100c) and fund data (e.g. data associated with the performance of the annuity fund) accordingly. The annuity payment predictor 180 is additionally in communication with the Economic Scenario Generator 170, and is configured to receive potential future economic scenarios, as will be understood.

Based on user data provided from the user database 150, the annuity payment predictor 180 is configured to determine possible, or potential, alternative future scenarios of user experiences, for example, number of user deaths, number and/or extent of increase in lives, number of user cancellations, etc. In this example, the annuity payment predictor 180 forecasts possible user experiences for, in the region of, 50 years in the future. Additionally, based on fund data received from the fund database 160 and the Economic Scenario Generator 170, the annuity payment predictor 180 is configured to project forward possible future returns of the annuity fund of the operator 130. This provides a range of alternative possible performances of the annuity fund.

Essentially, the annuity payment predictor 180 determines potential user bonus payment amounts for each user 110a, 110b, 100c for a plurality of alternative possible scenarios based on (a) possible future user experiences using existing user data, and (b) possible future annuity fund performance using existing fund data and data from the Economic Scenario Generator.

This provides numerous potential outcomes based on all the various possible permutations. These scenarios have a particular distribution in which the more likely scenarios are generally clustered, with the less likely scenarios being at the extreme of the distribution.

The annuity payment predictor 180 is configured to communicate the distribution of scenarios to a statistical analyser 190, which, using certain risk parameters associated the particular annuity operator 130, is able to determine a user bonus payment amount for each user 110a-110c. In some examples, certain bonus scenarios may be discarded from the process (e.g. where the determined bonus amount causes the operator's cumulative annuity payments to all users to exceed, or significantly exceed, the potential performance of the annuity fund). In other words, the statistical analyser 190 is configured to determine those possible scenarios for which the operator 130 will, or is likely to, remain solvent.

The result is a user bonus payment amount generally provided as a percentage so as to be applicable to all users 110a, 110b, 110c. For example, the user bonus payment amount may equate to 5% of the existing user annuity payment (e.g. the user basic payment amount, or a previous user annuity payment amount including the basic and a previous calculated bonus).

In this example, the percentage is provided to an accumulator 200, which determines a new user bonus payment amount for a particular period for each user, based on the percentage (e.g. 5%) determined and each existing user's annuity payment amounts (e.g. £100 for one user would provide a user bonus payment amount of £5).

This user bonus payment amount can then be communicated for further use by the operator 130 (e.g. to provide payment to the user, and/or to update the user database 150 for storage).

In some cases, the user bonus payment amount is monitored, and/or modified by a bonus modifier 210. The bonus modifier 210 may be configured to reduce or increase the bonus payable based on the need or desire to pay bonuses in light of other operator's behaviour (e.g. competing commercial activity) or concerns/judgements about capital preservation. This may modify individual payments, or the overall percentage. Similarly, the bonus modifier 210 may be configured to increase bonuses, in certain circumstances. In other words, in some cases, a bonus modifier 210 may intervene to increase or reduce the bonus, based on particular circumstances. Generally, such modification is performed manually.

In use, each user at the user terminals 110a-110c communicates certain user data to the operator 130 via the Internet 102. A skilled reader will appreciate that this may be through a secure website, or the like. Again, user data may include, for example, name, sex, postcode, age, desired fund payment (e.g. £100,000), lifestyle or health details, preferred minimum, or basic, payment amount, etc. Each user agrees to a basic user payment amount, whereby bonuses are paid in addition to that basic amount, in return for a particular payment to the operator's annuity fund.

The annuity provider 130 invests each user's payment cumulatively in a portfolio of investments, and prepares to pay, from time to time, a series of user basic payments to each user 110a-110c, and to determine and pay user bonus payments amounts based on the performance of the annuity fund using the apparatus 140 (e.g. at each payment period).

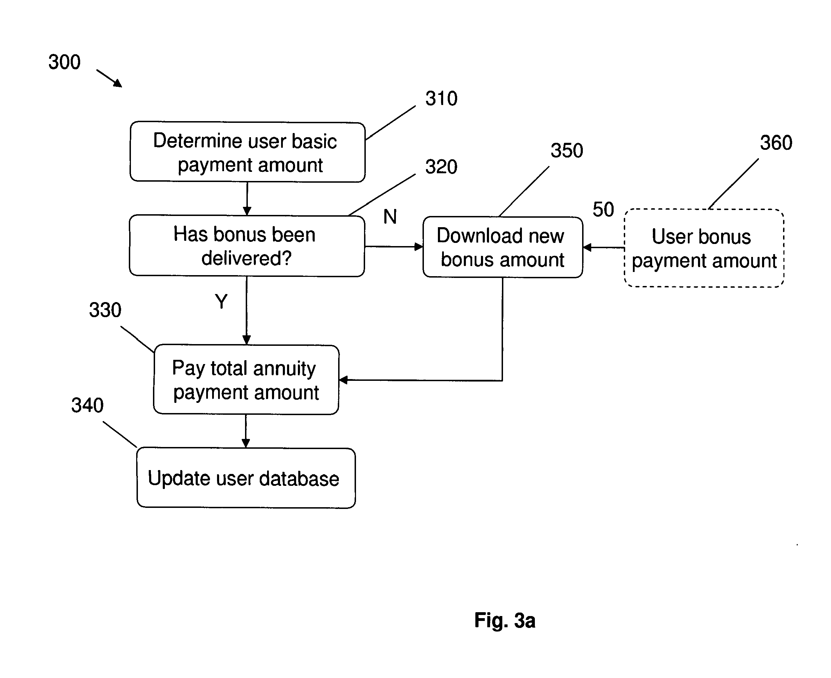

Figure 3a shows a flow diagram 300 of the steps taken by an operator 130 to pay a with-profits annuity payment for a particular user (e.g. 110a) at a particular payment period (e.g. each month). It will be appreciated that the payment period may be weekly, monthly, annually, or the like.

At a first step 310, the operator 130 retrieves user data from the user database 150 associated with a particular user (e.g. 110a), and determines the user basic payment amount of that user (e.g. £1000). This is the minimum payable amount to which the user 110a has agreed in a predetermined manner along with, in some cases, any previous user bonus payment amount that has been accumulated with the basic payment amount for that user.

At a second step 320, it determined if a user bonus payment has been delivered for that payment period. If so, the then user annuity payment amount (e.g. basic + bonus) determined from the user database 150 already comprises the total user annuity payment amount including any additional payment amount that should be paid in that period. As such, the user annuity payment is paid 330 to that particular user 110a. Subsequently, the user database 150 is updated 340 with the new user annuity payment details (i.e. an indication that the user 110a has been paid for that period).

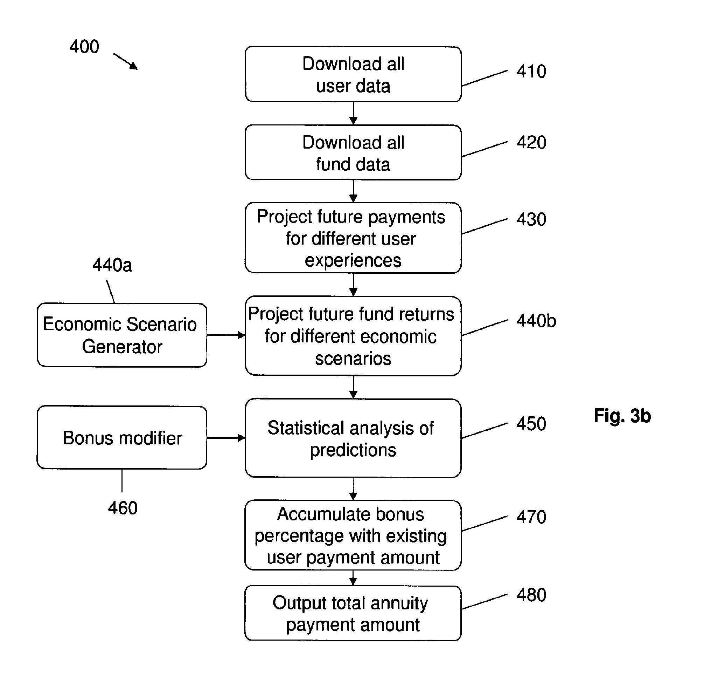

However, if the user bonus payment amount has not been determined for this particular period, then the operator 130 is configured to download 350 a user bonus payment amount from the apparatus 140 (described in relation to Figure 2). Figure 3b shows a flow diagram 400 of the steps taken by the apparatus 140 shown in Figure 2. In a first step 410, the apparatus 140 downloads all user data in the user database 150 associated with the annuity fund (this includes all data on all users, not just one user). Of course, it may decide not to download the data associated with the name, or specific address, of each user because that data would not necessarily affect the determination of the user bonus payment amount, as will be understood. In a second step 420, the apparatus 140 further downloads all fund data from the fund database 160 associated with the annuity fund (e.g. all types of assets, yield, maturity date, rating, etc).

In a third step 430, the apparatus predicts possible future user experiences, and the associated payments that would be made (e.g. one user 110b dies earlier than expected, and payments that would be subsequently made to users 110a and 110c). In a third and fourth step 440a, 440b, the apparatus 130 downloads a plurality of economic scenarios from the Economic Scenario Generator and predicts future fund returns based on existing fund data. As discussed, the third, fourth and fifth steps may predict into the future for 50 years, or so.

It will be appreciated that in this example the user database 150 contains data associated with only three users, and if it is considered that each user has only five potential scenarios associated therewith (although this is grossly simplified), then the potential user scenarios would be fifteen. Each scenario may provide a different possible future payment required to be provided by the annuity provider 130. In addition, the Economic Scenario Generator 170 may provide, for example, five thousand alternative economic scenarios, from which there may be 75,000 scenarios generated. Of course, this is only with three users, five possible user experiences, and five thousand alternative economic scenarios. If the number of users increased to only 100, then the possible scenarios is in excess of 2,500,000, which provides a significant amount of data to be not only generated, but also stored, processed, and analysed by the statistical analyser 190.

Nevertheless, this data is provided to the statistical analyser 190 which provides analyses 450 of the various predictions which, using certain risk parameters associated the particular annuity operator 130, is able to provide a particular user bonus payment amount. The risk parameters associated with this process are generally set by each operator 130, and will be based on the likelihood, or distribution, or particular scenarios.

On the basis of the predicted performance of the annuity fund, and the predicted user experience, the user bonus payment amount is determined as a percentage (e.g. 5%). Of course, in some examples, this is modified 460 by the bonus modifier 310 based on certain commercial parameters (e.g. modified down to 4%).

The apparatus 140 subsequently determines 470 the particular user's present, or basic, payment amount (e.g. £1000 for user 110a) and determines the user bonus payment amount for that user (e.g. 5% of £1000 = £50). This is then provided 480 to the operator 130 to allow for payment to a user 110a (see step 330 of Figure 3a). The user database 150 is updated 340 to show the updated user payment amount. This process is executed for each period.

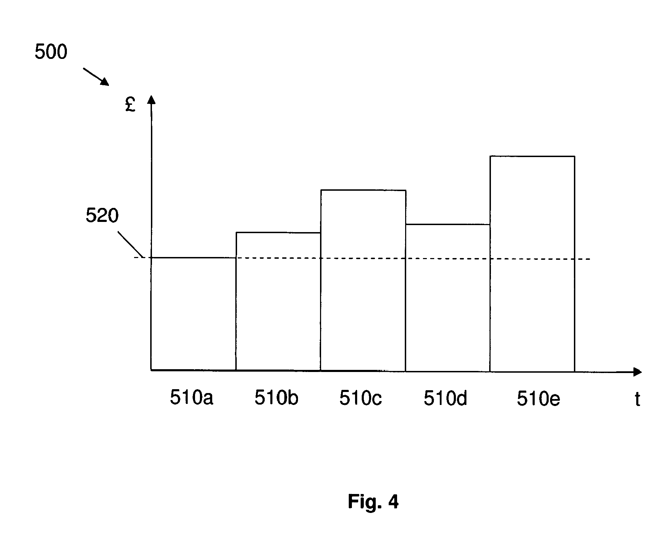

Figure 4 shows a chart 500 plotting the exemplary user annuity payment amount (£) for a with-profit annuity operator, using the apparatus 140 described above. The user annuity payment amount is shown over five periods 510a, 510b, 510c, 510d, 510e. Also, the user basic payment amount 520 is shown, which the operator 130 guarantees to pay to the user regardless. In this example, the user initially receives the user basic payment amount 520.

At the beginning of each period, the user bonus payment amount is calculated based on previous fund performance and cumulated with either the basic amount (as between the first period 510a and the second period 510b), or with the existing user annuity payment amount (as between second, third, fourth and firth periods 510b-510e).

Therefore, as described, after a user (e.g. 110a) communicates an initial payment to the operator 130, the operator 130 can invest that payment in an annuity fund cumulatively with other user's payments (or possibly individually). In some cases, the fund is spread across various different investments (e.g. across high risk and low risk investments). Nevertheless, the resultant size and complexity of the annuity systems means that the complexity of providing users with a guaranteed income, or fixed payment, but also being able to provide a generated bonus payment has meant that such annuity systems 100 have become unwieldy complex and, in addition, the determination of particular payments can, in some instances, take in the order of weeks, or months, which by today's standards in undesirable for both the user 110a and the operator 110b.

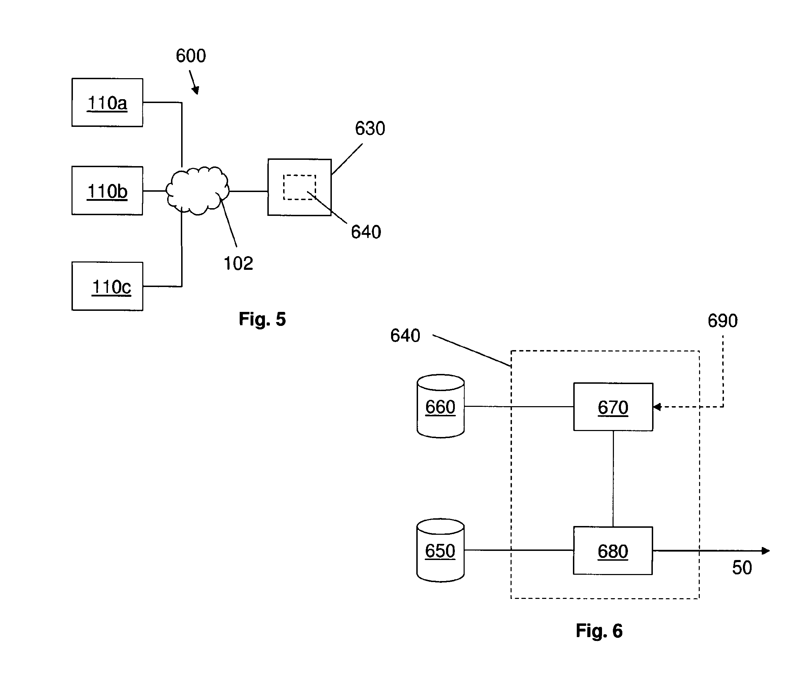

Figure 5 shows a further exemplary simplified representation of a system 600 for providing annuities, similar to that of Figure 1, whereby a user (e.g. 110a-110c) provides payment to an operator 630 in exchange for a series of user annuity payments (i.e. user basic payment and, if appropriate, a user bonus payment) from that annuity operator 630, paid from time to time. The system 600 is again implemented using a communication network 102, in a similar manner to above (e.g. using the Internet, encrypted using TLS, HTTPS, etc.).

The operator 130 again comprises an apparatus 640 for determining user bonus payments amounts, as well as a user database 650 and a fund database 660 in communication with the apparatus 640. Here, the fund database 660 is configured to store data on the annuity fund, which is associated with several users (e.g. 110a, 110b, 110c). In this example, the fund database 660 comprises fund data associated with assets such as company bonds, government bonds (i.e. gilts), or the like. Again, the user database 150 is configured to store data associated with all users (e.g. 110a, 110b, 110c), in a similar manner as before. In this example however, the user database 650 is additionally configured to store an upper limit user bonus payment amount. This upper limit, in addition to the user basic payment amount, constitutes cumulatively to a maximum user annuity payment amount. This may be specific to each user, or may be common to two or more users (e.g. all users). This may be a predetermined limit by the user, and/or by the operator. The upper limit bonus amount is associated with a level of payment that is expected to be sustainable given the initial, or expected, performance of the annuity fund. In this example, no Economic Scenario Generator 170 is provided.

Figure 6 shows the apparatus 640 for determining user bonus payments amounts shown in Figure 5. As described, the apparatus 640 is in communication with the user database 650 and the fund database 660. In this example, the apparatus 640 comprises a threshold comparator 670, which is configured to determine a performance parameter from fund data associated with the fund database 660. The performance parameter is associated with fund performance, which in this example is the number of defaults and/or impairments on particular assets, or investments, in the annuity fund (e.g. for a particular period). In other words, the performance parameter is indicative of the performance of the annuity fund.

The threshold comparator 670 is additionally configured to store, and use, a user-threshold parameter. In a similar manner to above, the user-threshold parameter is indicative of a particular threshold, or percentage of defaults or impairments, which is associated with one or more users (e.g. for a particular period). In some cases, some or all users may contractually agree to a particular user-threshold parameter. The user-threshold parameter may be considered to be indicative of the expected performance of the fund (e.g. expected number of defaults or impairments of the fund for a particular period). In some examples, the user-threshold parameter is provided with user data (e.g. specific to each user) while in other examples the user-threshold parameter can be provided separately by the operator 130 (e.g. common to some or all users of the annuity fund).

Upon determination of the performance parameter, the comparator 670 is configured to compare that determined performance parameter with the user-threshold parameter, and provide an indication as to (a) if the performance parameter exceeds the user-threshold parameter, and (b) if it does exceed, to what extent it exceeds.

This is then communicated to an accumulator 680 of the apparatus 640, which determines a user bonus payment amount for each user based on the comparison of the comparator 670. This user bonus payment amount is determined by using the upper limit user bonus payment amount, or the existing user bonus payment amount, and modifying this (e.g. modifying this proportionality) if the comparator 670 has determined that the performance parameter is in excess of the user-threshold parameter. In other words, if the performance parameter is in excess of the user-threshold parameter then the accumulator 680 is configured to reduce the user bonus payment amount from an upper limit, or a previously determined user bonus payment amount determined in an earlier period, commensurately with the extent to which the performance parameter is in excess of the user-threshold parameter.

This new user bonus payment amount can then be communicated for further use by the operator 630 (e.g. to allow for payment to the user, and/or to update the user database 150).

In some embodiments, the comparator 670 is additionally configured to receive and use longevity data 690 associated with predicted, or expected, longevity levels (e.g. life expectancy, sex, postcode, etc.) of one or more users (e.g. all users). The longevity data may be considered to be associated with the estimated, or guessed, average life expectancy for users. This may be for particular sexes and/or regions (e.g. postcodes or health related) in a known manner, or may be only a single common estimated, or guessed, average life expectancy for all users. In embodiments using longevity data, the comparator 670 is additionally configured to compare the performance parameter with the user-threshold parameter, and longevity data, in order to allow for determining a user bonus payment amount. In some cases, the user bonus payment amount may be maintained at the upper limit, or at a previously determined user bonus payment amount (i.e. determined in an earlier period), when the longevity data suggest a reduction in expected longevity, even if the performance parameter exceeds, or is equal to, the user-threshold parameter. Similarly, the apparatus 640 may be configured to reduce the user bonus payment amount from the upper limit, or from a previously determined user bonus payment amount, when the longevity data suggests an increase in expected longevity, even if the performance parameter is less than, or is equal to, the user-threshold parameter. In some regards, this may be considered to be a multi-dimensional decision, for example, a two dimensional decision.

In use, each user at the user terminals 110a-110c communicates certain user data to the operator 630 via the Internet 102 (e.g. through a secure website, or the like). Again, user data may include, for example, name, sex, postcode, age, desired fund payment (e.g. £100,000), lifestyle or health details, preferred minimum, or basic payment amount, etc. Each user agrees to a user basic payment amount and an upper limit for the user bonus payment amount - whereby bonuses are paid in addition to that basic amount - in return for a particular payment to the operator's annuity fund, which may be a one-off payment. In this example, the user and/or operator also set initially the user-threshold parameter (e.g. by agreement).

Essentially, the annuity provider 630 invests each user's payment cumulatively in a portfolio of investments, and prepares to pay, from time to time, a series of user basic payments to each user 110a-110c in addition to the user bonus payment amount, not exceeding the upper limit. In other words, in this example, a user initially receives the user bonus payment amount in addition to the user basic payment amount. The operator 630 subsequently determines, and pays, user bonus payments amounts based on the actual performance of the annuity fund and the expect performance of the annuity fund using the apparatus 640.

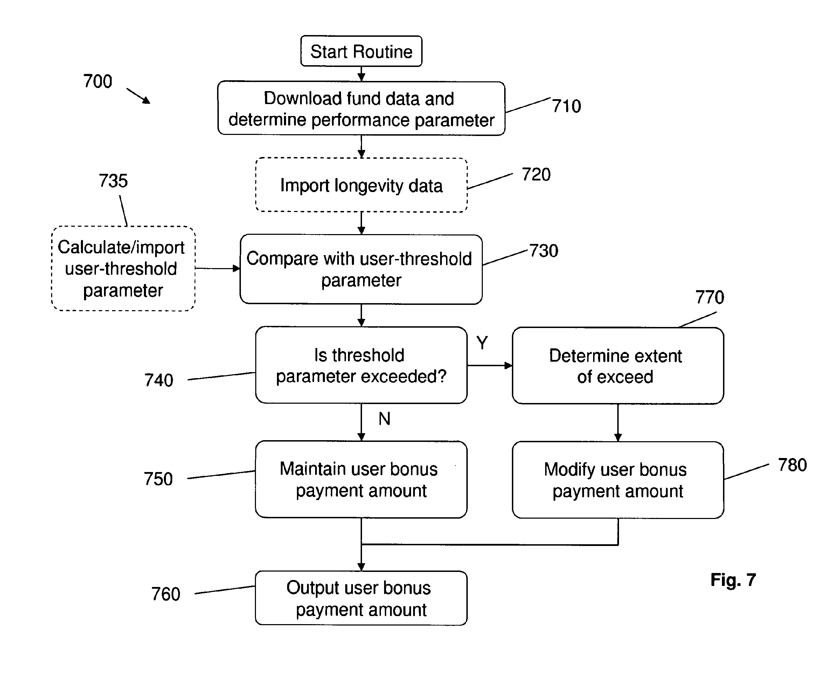

Figure 7 shows a flow diagram 700 of the steps taken by the operator 630 to determine a user bonus payment amount for a particular user (e.g. 110a) at a particular payment period (e.g. each month) using the apparatus of Figure 6 (cf. 360 in Figure 3a). Again, it will be appreciated that the payment period may be weekly, monthly, annually, or the like.

Assume that the user bonus payment amount is set at £100, which is at the upper limit. Also, assume that the user basic payment amount is at £1,000. The user annuity payment paid in the last period would have been £1,100. The user also has, associated therewith, a user-threshold parameter, which in this example is given as a percentage of expected defaults or impairments on the annuity fund (e.g. 5%). In addition, the user-threshold parameter has associated therewith an average life expectancy for that period (e.g. life expectancy of the general public). For example, the average life expectancy may be 75 years.

At a first step 710, the apparatus 630 retrieves fund data associated with the defaults, or impairments, that have occurred on the annuity fund (e.g. within the last payment period). Further data on the fund may be retrieved, but is not required. The apparatus 640 subsequently determines a performance parameter of the fund, which is based on the actual number of defaults or impairments and is provided as a ratio, or percentage (e.g. 10%).

In this example, longevity data for this period is also imported at a second step 720 (e.g. provided by the operator). This can be provided from known sources providing longevity data (e.g. life expectancy for this period is 75 years).

In a third step 730, the performance parameter, and where appropriate the longevity data, is compared with a user-threshold parameter, which is imported 735 from the user database 560. If the performance parameter indicates that the number of defaults is presently at 10%, but the user-threshold parameter is set at 5%, the performance parameter is determined to be in excess of the user-threshold parameter.

Although in this example, the user-threshold parameter is specific to a particular user, it will be appreciated that it may be common to two or more users (e.g. all users). In some example, the user-threshold parameter is common to the annuity fund, and therefore, and may not need to be imported, per se.

In other examples, the user-threshold parameter may be calculated (e.g. every period). The user-threshold parameter may be calculated, for example, by using the maximum future annuity fund value, using fund data.

In a fourth step, the apparatus determines that the performance parameter exceeds the user threshold parameter, which as mentioned above, is determined to be in excess of the user-threshold parameter (i.e. 10% being greater than 5%). The apparatus also compares the longevity data, but notes that the longevity data matches the user-threshold parameter.

If the performance parameter had not exceeded the user-threshold parameter, then in a fifth step 750, and sixth step 760, the user bonus payment amount would have been maintained (e.g. at £100), and output for accumulation with the user basic payment amount (e.g. for accumulation with £1,000).

However, in this example, in a seventh step 770 the extent to which the performance parameter is in excess of the user-threshold parameter is determined (i.e. 100% in excess), and in an eighth step the user bonus payment amount is reduced (e.g. reduced commensurately, for example, to £75). Subsequently, the user bonus payment amount is output as before, for accumulation with the user basic payment amount.

In this example, while the longevity data matched the user-threshold value, that need not always be the case. In the example when the longevity data (e.g. life expectancy) increases with respect to the user-threshold parameter, then the apparatus may be configured to modify down the user bonus payment amount, even if the performance data does not exceed the user-threshold parameter. Similarly, when the longevity data decreases with respect to the user-threshold parameter, then the apparatus 640 may be configured to maintain, or modify up, the user bonus payment amount, even if the performance data exceeds the user-threshold parameter.

In this case, the output user bonus payment amount (i.e. £75) can be accumulated with the particular user's basic payment amount (e.g. £1000 for user 110a) and provided to the user. In addition, the user bonus payment amount can be updated and stored in the user database 560 for subsequent use during future periods.

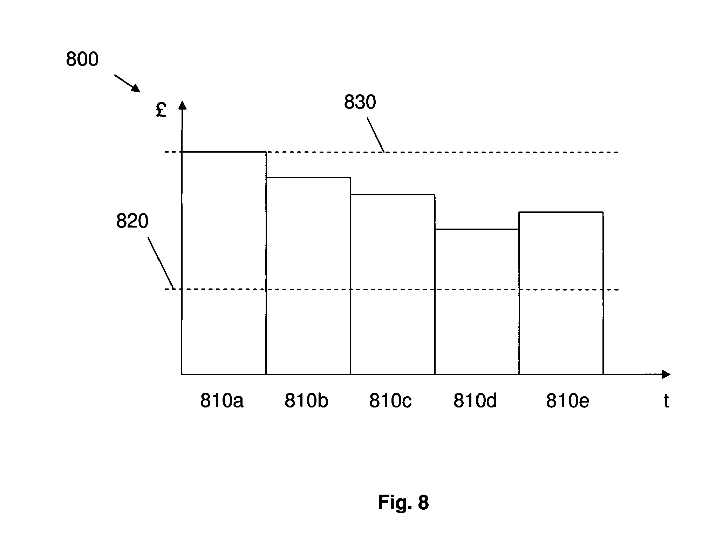

Figure 8 shows a chart 800 plotting the exemplary user annuity payment amount (£) for a with-profit annuity operator 630, using the apparatus 640 described above. Again, the user annuity payment amount is shown over five periods 810a, 810b, 810c, 810d, 810e. Also, the user basic payment amount 820 is shown, which the operator 130 guarantees to pay to the user regardless. In this example, the user initially receives the user basic payment amount 820, in addition to the user bonus payment amount at the upper limit 830.

For each period, the user bonus payment amount is calculated based on previous fund performance and modified when the annuity fund has performed worse than provided for by the user-threshold parameter (e.g. for that period), as shown between the first period 810a, second period 810b, third period 810c and fourth period 810d. Exceptionally, at between the fourth and fifth period, the bonus has increased (e.g. due to a perceived impairment being rescinded)

While in the above example, the user-threshold parameter was considered to be indicative of a particular threshold, or percentage of defaults or impairments, which is associated with one or more users (e.g. pre-determined), it will be appreciated that that need not always be the case. In some examples, the described method may comprise determining an initial user-threshold parameter (e.g. in a similar manner to above), and then determining subsequent user-threshold parameters (e.g. after a period comprising defaults).

In such examples, the user-threshold parameter can be determined, or subsequently determined, by using user annuity payment amount for a particular period (e.g. the total amount payable to a user for the previous period, or in some cases the initial period, for example basic =£650, bonus = £550, total = £1,100). In such cases, the performance parameter of the fund can be determined for the projected, or expected, fund performance for subsequent periods (e.g. the next period). In some examples, this may be done based on the assumption of that no future defaults/impairments occur. This may provide a performance parameter associated with an expected total amount payable to a user for the next period (e.g. £1,000 can be payable to a user).

In a similar manner as before, upon determination of the performance parameter (e.g. £1,000), the comparator 670 is configured to compare that determined performance parameter with the user-threshold parameter (e.g. compare £1,000 with £1,100), and provide an indication as to (a) if the performance parameter is less than the user-threshold parameter, and (b) if it is less, to what extent it is less.

In the event that it is less, then this can then communicated to an accumulator 680 of the apparatus 640, which reduces the user bonus payment amount for that user based on the comparison of the comparator 670 (i.e. reduce the bonus amount from £550 to £450). Likewise, in the event that it is more (e.g. performance parameter is £1,200 and user-threshold parameter is £1,100), then this can then be communicated to an accumulator 680 of the apparatus 640, which maintains, or increases, the user bonus payment amount for that user based on the comparison of the comparator 670.

In some further examples, the apparatus can be configured to determine no reduction, or an increase, in user bonus payment amount when a comparison of the performance parameter is greater than a previously determined performance parameter (e.g. determined for a previous or initial period). Such a determination can be provided even when the performance parameter is less than a determined user-threshold parameter. This can allow for a bonus, which has previously been reduced, to be increased. Of course, in some cases, this increase may be such that the user bonus payment amount, or user annuity payment amount, is not greater than an initial amount (e.g. an initial payment amount agreed by a user).

It will be appreciated that in the above examples, the operator need only use a performance parameter associated with the annuity fund, along with a user-threshold parameter in order to determine the extend of a bonus paid to a user. There is no requirement to use an Economic Scenario Generator, nor project possible future user scenarios, of fund scenarios. The apparatus of Figure 6 need not download and use all fund data, and/or user data, as is the case with Figure 2. In addition, it will be apparent that the determination of a user bonus payment amount can occur, in comparative terms, almost instantly, when compared with the weeks or months of the method described in relation to Figure 2.

In such a manner, a user can obtain a user annuity payment, which includes a user basic amount and a user bonus amount, whereby the complexity the determination of payments by the operator 630 is significantly reduced.

It will be appreciated that apparatus 640 of Figure 6 may be provided on a dedicated apparatus, which may comprise hardware, firmware and/or software. For example, the comparator 670 and/or accumulator 680 may be provided using a processor and memory configured in a known manner, or may be provided using an application specific integrated circuit, field programmable gate array, or the like. Similarly, the customer database, and fund database may be provided by non-volatile storage (e.g. HDD, flash, etc.).

While in the above embodiment, the apparatus 640 is described as being comprised with the operator 630, it will readily be appreciated that in some examples, the apparatus 640 may be provided remotely, for example, via a network (e.g. via a network that is wired, wireless, or combination thereof). In such examples, the apparatus 640 may be for use (e.g. in communication with) more that one operator 630. In addition, the performance parameter may be determined remotely (e.g. remotely from the apparatus or operator), and subsequently provided to the apparatus or operator.

In some examples in relation to Figure 5 to 8, defaults or impairments can be expressed as full (e.g. 1 default), partial (e.g. 0.4 default), or combination thereof (e.g. 1.4 defaults). For example, a full default may occur when a total loss occurs of a particular asset associated with the fund. In other words, no income is subsequently generated from that asset. A partial loss may occur when there is only a partial loss of an asset. In other words, part of the income is recovered (e.g. through agreement). Therefore, a skilled reader will appreciate that a default or impairment may be associated with only a partial loss, rather than a full loss, but that this can none the less be expressed as a default or impairment (e.g. 0.1, 0.15, 0.5, etc, of a default). Additionally, while in the above embodiments have been described that a user is in communication with an operator, it will be appreciated that in alternative embodiments, the user may be in communication with the operator via an intermediary (e.g. a financial advisor).

While, the above methodology has been exemplified by an upper limit, it will be appreciated that in some embodiments, the bonus may be allowed to exceed the upper limit. In those cases, the upper limit may be considered to be an initial limit.

It will be appreciated that any of the aforementioned apparatus may have other functions in addition to the mentioned functions, and that these functions may be performed by the same apparatus.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention. The drawings and detailed description are not intended to limit the invention to the particular form disclosed, but to the contrary, the intention is to cover all modifications, equivalents, and alternatives falling within the scope of the invention as defined by the appended claims.

## Claims

1. A method for determining a user bonus payment amount associated with an annuity fund, the method comprising:
determining a performance parameter from fund data associated with the performance of an annuity fund;
comparing the determined performance parameter with a user-threshold parameter; and
determining a user bonus payment amount based on the comparison of the performance parameter and the user-threshold parameter, the user bonus payment amount to be accumulated with a user basic payment amount to provide a user annuity payment associated with the annuity fund.

2. The method according to claim 1, additionally comprising accumulating the user bonus payment amount and a user basic payment amount to allow for providing a user annuity payment.

3. The method according to claim 1 or 2, wherein the user bonus payment amount is associated with an upper bonus limit, and wherein the method comprises determining the user bonus payment amount based on the comparison of the performance parameter and the user-threshold parameter, and additionally on the upper bonus limit.

4. A method according to claim 3, wherein the method comprises reducing the user bonus payment amount from an upper limit, or a previously determined user bonus payment amount, when the performance parameter exceeds, or is equal to, the user-threshold parameter.

5. The method according to any preceding claim, wherein fund data comprises data associated with the number of defaults, or impairments on investments, of the particular annuity fund.

6. The method according to claim 5 wherein the performance parameter comprises a percentage, or ratio, associated with the performance of the annuity fund.

7. The method according to any preceding claim, wherein fund data is communicated, and/or received, from a fund database, the fund database comprising data associated with investments of the annuity fund.

8. The method according to any of the claims 1 to 4, wherein the user-threshold parameter is a predefined parameter associated with an expected amount, or percentage, of defaults or impairments of the annuity fund.

9. The method according to claim 8, comprising receiving the user-threshold parameter for comparing with the determined performance parameter for a user database.

10. The method according to any preceding claim comprising determining the user bonus payment amount at period intervals, such as regular period intervals.

11. Apparatus for determining a user bonus payment amount associated with an annuity fund, the apparatus comprising:
a comparator configured to receive fund data associated with performance of an annuity fund and to determine a performance parameter using received fund data, the comparator further configured to compare a performance parameter with a user-threshold parameter associated with an annuity fund; and
an accumulator configured to determine a user bonus payment amount for a user based on the comparison of the comparator, such a user bonus payment amount for accumulation with a user basic payment amount to provide a user annuity payment associated with an annuity fund.

12. Apparatus according to claim 11, wherein the apparatus is configured to communicate a determined user bonus payment amount to allow for providing a user annuity payment.

13. Apparatus according to any of the claims 11 or 12, wherein the apparatus is in communication with a fund database in order to receive fund data, and wherein the apparatus is configured to determine a performance parameter from fund data comprising number of defaults, or impairments on investments, of a particular annuity fund.

14. Apparatus according to any of the claims 11 to 13, further configured to receive a user-threshold parameter for comparing with the determined performance parameter from a user database.

15. A computer program configured to provide the method of any of the claims 1 to 10.
